# EUROPÄISCHE PATENTSCHRIFT

(11) **EP 1 341 830 B1**
(45) Veröffentlichungstag und Bekanntmachung des Hinweises auf die Patenterteilung: **11.01.2006**
(21) Anmeldenummer: 01994686.2
(22) Anmeldetag: 21.11.2001
(51) Int. Cl.: C08F 279/04, C08L 51/04, C08F 2/22

(54) **VERFAHREN ZUR HERSTELLUNG KAUTSCHUKHALTIGER THERMOPLASTISCHER FORMMASSEN**
METHOD FOR PRODUCING THERMOPLASTIC MOLDING MATERIALS CONTAINING RUBBER
PROCEDE DE PREPARATION DE MATIERES A MOULER THERMOPLASTIQUES CONTENANT DU CAOUTCHOUC

(30) Priorität: 22.11.2000 DE 10058133
(43) Veröffentlichungstag der Anmeldung: 10.09.2003
(73) Patentinhaber: BASF Aktiengesellschaft, 67056 Ludwigshafen (DE)
(72) Erfinder: GÜNTHERBERG, Norbert, 67346 Speyer (DE); CZAUDERNA, Bernhard, 69493 Hirschberg (DE); HEINEN, Hartmut, 50765 Köln (DE)
(86) Internationale Anmeldenummer: PCT/EP2001/013487
(87) Internationale Veröffentlichungsnummer: WO 2002/042347

(56) Entgegenhaltungen:
- EP-A- 0 284 428
- EP-A- 0 406 806
- EP-A- 0 688 798
- EP-A- 0 943 635
- DE-A- 19 846 202
- DE-A- 19 846 209
- US-A- 4 302 558
- US-A- 5 872 184

## Beschreibung

Die Erfindung betrifft ein Verfahren zur Venhinderung des Formbelags bei der Herstellung von Spritzgußformteilen aus kautschukhaltigen thermoplastischen Formmassen, bei dem zum Spritzguß thermoplastische Formmassen verwendet werden, die mindestens ein kautschukelastisches Polymerisat A und mindestens ein thermoplastisches Polymeres B umfassen, die durch Polymerisation hergestellt und miteinander vermischt werden, wobei das kautschukelastische Polymerisat A nach der Polymerisation in einer wässrigen Phase dispergiert vorliegt.

Für durch Zusatz von Kautschuken schlagzäh modifizierte thermoplastische Formmassen sind der Spritzguß und die Extrusion besonders häufig verwendeten Verarbeitungsverfahren. Häufig werden auch beide Schritte hintereinander angewendet, wobei durch das Extrudieren ein Granulat hergestellt wird, aus dem anschließend im Spritzguß Formteile hergestellt werden. Beiden Verfahren ist gemein, daß Polymere aufgeschmolzen und die Polymerschmelze durch Düsen herausgedrückt wird. Die dazu erforderlichen hohen Temperaturen bzw. Drucke können eine teilweise Zersetzung der Formmasse bewirken. Die Zersetzungsprodukte lagern sich als Formbelag an den verwendeten Spritzgußformen bzw. Extruderbauteilen ab. Formbelag entsteht außerdem durch ausschwitzende (migrierende) Bestandteile der Formmassen, wie nicht umgesetzte. Eduktmonomere und deren Oligomere und Polymere, sowie durch Polymerisations-Hilfsstoffe und Gleitmittel.

Der Formbelag sammelt sich in der Form selbst, sowie an den Düsen und den Entgasungsöffnungen an und stört die Formgebung beim Spritzgießen (schlechtere-Oberflächengüte der Spritzgußteile) und den Extrusionsprozeß. Insbesondere treten derartige Beläge an den spritzgegbasenen Formteilen selbst auf und vermindern deren Qualität. Sie stören aufgrund ihrer abweichenden Farbe, sind oft ölig oder matt und führen zu inhomogenen und ungleichmäßigen Oberflächen. Außerdem erschweren oder vereiteln die Beläge z.B. das Bedrucken, Verkleben und Galvanisieren der Formteile.

Zum Entfernen des Formbelags muß der Produktionsprozeß nach einer gewissen Extrusionsdauer bzw. Anzahl von Spritzgußvorgähgen unterbrochen werden, um die Form, die Düsen und die Entgasungsöffnungen mechanisch zu säubern. Dieser Maschinenstillstand (die sog. Reinigungsabstellung) bedeutet Produktionsausfall, außerdem bindet die zeitaufwendige Reinigung Arbeitskraft. Schließlich muß ein gewisser Anteil der Formteile als Ausschuß verworfen werden.

Aus der älteren, nicht vorveröffentlichten Anmeldung DE-Az. 19962570.0 ist bekannt, zur Verminderung des Formbelags ein Magnesiumoxid mit einer Zitronensäurezahl < 1500 sec beim Extrudieren oder Spritzgießen mitzuverwenden. Die damit erzielte Verminderung des Formbelags ist nicht für alle Anwendungen zufriedenstellend.

Die DE-A 44 08 213 offenbart ABS-Formmassen mit heller Eigenfarbe, die geringe Mengen Alkalimetallhydrogencarbonate oder - carbonate, oder geringe Mengen Erdalkalimetalloxide oder - carbonate enthalten. Die genannten Metallverbindungen werden mit Polybutadienpfropfkautschuk, Styrol-Acrylnitril-Copolymerisat und üblichen Additiven in einem Kneter bei 180 bis 200°C trocken vermischt. Die Metallverbindungen werden demnach nicht einer wässrigen Phase, sondern einem trockenen Polymeren zugefügt. Eine Verminderung des Formbelags erwähnt die Schrift nicht.

Es bestand die Aufgabe, den geschilderten Nachteilen abzuhelfen. Es sollte ein. Verfahren bereitgestellt werden, mit dem es bei der Herstellung von Spritzgußformteilen aus kautschukhaltigen thermoplastischen Formmassen zu einer deutlich verminderten Formbelagsbildung kommt. Insbesondere sollte die mit dem Verfahren erzielbare Formbelagsvermindering stärker ausgeprägt sein als bei der beschriebenen Mitverwendung von Magnesiumoxid.

Demgemäß wurde das eingangs definierte Verfahren gefunden. Es ist dadurch gekennzeichnet, daß man nach Abschluß der Polymerisation von Komponente A der wässrigen Phase mindestens ein pH-Puffer-system zufügt.

### Das kautschukelastische Polymerisat A

Als kautschukelastisches Polymerisat A ist jedes Polymere mit kautschukelastischen Eigenschaften geeignet. Derartige kautschukelastische Polymere (nachfolgend kurz als Kautschuke, bezeichnet) haben bevorzugt eine Glasübergangatemperatur Tg von 0°C oder darunter, bestimmt nach DIN 53765 mit Differential Scanning Calorimetry (DSC), Heizrate 20 K/min, Spülgas Stickstoff, Bestimmung aus dem zweiten Lauf als midpoint-Tg (die Temperatur bei der die halbe Stufenhöhe am Glasübergang erreicht ist).

Bevorzugt stellt man das Polymerisat A in Gegenwart von Wasser her, wodurch man eine wässrige Polymerdispersion erhält. Falls das Polymerisat A in Abwesenheit von Wasser hergestellt wird, muß aus dem Polymerisat A und Wasser auf übliche Weise eine Dispersion hergestellt werden.

Bevorzugt sind die kautschukelastischen Polymerisate A ausgewählt aus in wässriger Phase hergestellten bzw. vorliegenden
- Dienkautschuken, z.B. auf Basis von konjugierten Dienen wie Butadien, Isopren, Norbornen, Chloropren,
- Acrylatkautschuken, z.B. auf Basis von Alkylestern der Acrylsäure bzw. Methacrylsäure, wie n-Butylacrylat und 2-Ethylhexylacrylat. Die Acrylatkautschuke enthalten in der Regel vernetzende Monomere wie. Allylester der Acrylsäure bzw. Methacrylsäure oder Dihydrodicyclopentadienylacrylat
- Kautschuken auf Basis von Ethylen und Propylen (= EPM-Kautschuke) bzw. zusätzlich einem Dien wie Ethylidennorbornen oder Dicyclopentadien (= EPDM-Kautschuke)
- Silikonkautschuken (Siloxankautschuken), z.B. auf Basis hochvemetzter Siliconöle, die wiederum aus Siloxanen wie z.B. Methylsiloxanen, aufgebaut sind. Als Vernetzer dienen Peroxide oder auf andere übliche Vernetzer. Grundpolymer der Siliconkautschuke ist beispielsweise Dimethylpolysiloxan,
sowie deren Mischungen. Es sind auch andere kautschukelastische Polymerisate A geeignet, sofern sie in wässriger Phase, also als Dispersion, vorliegen.

In einer bevorzugten Ausführungsform ist das kautschukelastische Polymerisat A ein Pfropfpolymerisat, enthaltend mindestens eine kautschukelastische Grundstufe mit einer Glasübergangstemperatur Tg von 0°C oder darunter und mindestens eine harte Pfropfstufe mit einer Glasübergangstemperatur Tg über 25°C. Tg wird bestimmt wie bereits beschrieben.

Nachfolgend wird diese Ausführungsform näher beschrieben.

Die Pfropfpolymerisate enthalten bevorzugt, bezogen auf das pfropfpolymerisat,
a1) 30. bis 95, bevorzugt 40 bis 90 und besonders bevorzugt 40 bis 85 Gew.-% einer kautschukelastischen Grundstufe aus, bezogen auf a1)
   a11) 50 bis 100, bevorzugt 60 bis 100 und besonders bevorzugt 70 bis 100 Gew.-% eines (C₁-C₁₀-Alkyl) esters der Acrylsäure,
   a12) 0 bis 10, bevorzugt 0 bis 5 und besonders bevorzugt 0 bis 2 Gew.-% eines polyfunktionellen, vernetzenden Monomeren,
   a13) 0 bis 40, bevorzugt 0 bis 30 und besonders bevorzugt 0 bis 20 Gew.-% von einem oder mehreren weiteren monoethylenisch ungesättigten Monomeren,
   oder aus
   a11*) 50 bis 100, bevorzugt 60 bis 100 und besonders bevorzugt 65 bis 100 Gew.-%. eines Diens mit konjugierten Doppelbindungen,
   a12*) 0 bis 50, bevorzugt 0 bis 40 und besonders bevorzugt 0 bis. 35 Gew.-% von einem oder mehreren monoethylenisch ungesättigten Monomeren, und
a2) 5 bis 70, bevorzugt 10 bis 60 und besonders bevorzugt 15 bis 60 Gew.-% einer Pfropfstufe aus, bezogen auf a2),
   a21) 50 bis 100, bevorzugt 60 bis 100 und besonders bevorzugt 65 bis 100 Gew.-% einer Styrolverbindung der allgemeinen Formel I 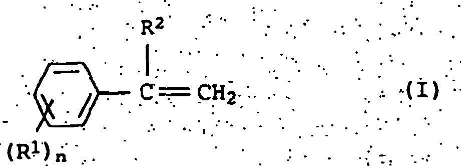 n der R¹ und R² für Wasserstoff oder C₁-C₈-Alkyl stehen und n gleich 0, 1, 2 oder 3 ist,
      oder eines (C₁-C₈-Alkyl)esters der Acrylsäure oder Methacrylsäure,
      oder einer Mischung der Styrolverbindung und des (C₁-C₈-Alkyl)esters der Acrylsäure oder Methacrylsäure,
   a22) 0 bis 40, bevorzugt 0 bis 38 und besonders bevorzugt 0 bis 35 Gew.-% Acrylnitril oder Methacrylnitril oder deren Mischungen,
   a23) 0 bis 40, bevorzugt 0 bis 30 und besonders bevorzugt 0 bis 20 Gew.-% von einem oder mehreren weiteren monoethylenisch ungesättigten Monomeren.

Als (C₁-C₁₀-Alkyl)ester der Acrylsäure, Komponente a11), eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

Vernetzende Monomere a12) sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1, 4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols (siehe DE-OS 12 60 135), der unter dem Namen Dihydrodicyclopentadienylacrylat bekannt ist, sowie die Allylester der Acrylsäure und der Methacrylsäure.

Vernetzende Monomere a12) können in den Formmassen je nach Art der herzustellenden Formmassen, insbesondere je nach den gewünschten Eigenschaften der Formmassen, enthalten sein oder nicht.

Falls vernetzende Monomere, a12) enthalten sind, so betragen die Mengen 0,01 bis 10, bevorzugt 0,3 bis 8 und besonders bevorzugt 1 bis 5 Gew.-%, bezogen auf a1).
Bei den weiteren monoethylenisch ungesättigten Monomeren a13), die auf Kosten der Monomeren a11) und a12) im Pfropfkern a1) enthalten sein können, handelt es sich beispielsweise um:
vinylaromatische Monomere wie Styrol, Styroldenvate der obigen allgemeinen Formel I;
Acrylnitril, Methacrylnitril;
C₁- bis C₄-Alkylester der Methacrylsäure wie Methylmethacrylat, weiterhin auch die Glycidylester, Glycidylacrylat und -methacrylat;
N-substituierte Maleinimide wie N-Methyl-, N-Phenyl- und N-Cyclohexylmaleinimid;
Acrylsäure, Methacrylsäure, weiterhin Dicarbonsäuren wie Maleinsäure, Fumarsäure und Itaconsäure sowie deren Anhydride wie Maleinsäureanhydrid;
Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;
aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;
ungesättigte Ether wie Vinylmethylether,
sowie Mischungen dieser Monomeren.

Bevorzugte Monomeren a13) sind Styrol, Acrylnitril, Methylmethacrylat, Glycidylacrylat und -methacrylat, Acrylamid und Methacrylamid.

Anstelle der Grundstuferi-Monomere a11) bis a11) kann die Grundstufe a1) auch aus den Monomeren a11*) und a12*) aufgebaut sein.

Als Diene mit konjugierten Doppelbindungen, a11*) kommen insbesondere Butadien, Isopren, Norbornen, und deren halogensubstituierte Derivate, etwa Chloropren, in Betracht. Bevorzugt sind Butadien und Isopren, insbesondere Butadien.

Als weitere monoethylenisch ungesättigte Monomere a12*) können die Monomere mitverwendet werden, wie sie für die Monomeren a13) bereits genannt wurden.

Bevorzugte Monomeren a12*) sind Styrol, Acrylnitril, Methylmethacrylat, Glycidylacrylat und -methacrylat, Acrylamid und Methacrylamid. Besonders bevorzugtes Monomer a12*) ist Styrol.

Der Pfropfkern a1) kann auch aus einer Mischung der Monomeren a11) bis a13), und a11*) bis a12*), aufgebaut sein.

Die beiden Ausführungsformen des Pfropfkerns aus
- Monomeren a11) bis a13) = Acrylatkautschuk, und
- Monomeren a11* bis a12*) = Dienkautschuk
sind in gleicher Weise bevorzugt.

Enthält der Pfropfkern a1) die Acrylatkautschuk-Monomeren a11) bis a13), so entstehen nach Polymerisation der Pfropfstufe a2) und Abmischung mit einem harten thermoplastischen Polymeren B aus Polystyrolacrylnitril (SAN), der sog. Hartmatrix, Formmassen vom ASA-Typ. Enthält der Pfropfkern die Dienkautschuk-Monomeren a11*) bis a12*), so entstehen nach Pfropfung und Abmischung mit der SAN-Hartmatrix Formmassen vom ABS-Typ.

Die Pfropfstufe a2) enthält als Komponente a21) entweder die Styrolverbindung der allgemeinen Formel I, oder einen (C₁-C₈-Alkyl)ester der Acrylsäure oder Methacrylsäure, oder eine Mischung der Styrolverbindung und des (C₁-C₈-Alkyl)esters der Acrylsäure oder Methacrylsäure. Als Styrolverbindung verwendet man bevorzugt Styrol, alpha-Methylstyrol, p-Methylstyrol oder deren Mischungen. Besonders bevorzugt ist Styrol. Bevorzugt verwendet man als (C₁-C₈-Alkyl)ester der Acrylsäure oder Methacrylsäure Methylmethacrylat (MMA) oder eine Mischung von MMA mit Methyl-, Ethyl-, Propyl- oder Butylacrylat.

Enthält der Pfropfkern die Acrylatkautschuk-Monomeren a11) bis a13) oder die Dienkautschuk-Monomeren a11*) bis a12*) und enthält die Pfropfstufe a2) als Monomere a21) (C₁-C₈-Alkyl)ester der (Meth)acrylsäure wie MMA und ggf. Styrol, so entstehen nach Abmischung mit Polymethylmethacrylat (PMMA) schlagzähe PMMA-Formmassen.

Bezüglich der Monomeren a21) bzw. a23) sei auf die Ausführungen zur Komponente a13) verwiesen. Demnach kann die Pfropfschale a2) auf Kosten der Monomere a21) weitere Monomere a22), oder a23), oder deren Mischungen, enthalten. Bevorzugt ist die Pfropfschale a2) aufgebaut aus Polystyrol, Copolymeren aus Styrol (oder alpha-Methylstyrol) und Acrylnitril oder Copolymeren aus Styrol und Methylmethacrylat.

Die Herstellung der Pfropfstufe a2) kann unter den gleichen Bedingungen wie die Herstellung der Grundstufe a1) erfolgen, wobei man die Pfropfstufe a2) in einem oder mehreren Verfahrensschritten herstellen kann. Dabei können die Monomeren a21), a22) und a23) einzeln oder in Mischung miteinander zugefügt werden. Das Monomerenverhältnis der Mischung kann zeitlich konstant oder ein Gradient sein. Auch Kombinationen dieser Verfahrensweisen sind möglich. Beispielsweise kann man zunächst Styrol alleine, und danach eine Mischung aus Styrol und Acrylnitril, auf die Grundstufe a1) polymerisieren. Die Bruttozusammensetzung bleibt von den genannten Ausgestaltungen des Verfahrens unberührt.

Einzelheiten zur Herstellung von Pfropfpolymeriaaten auf Basis von Dienen (z.B. Butadien alleine oder Butadien mit Styrol als Comonomer) in wässriger Phase sind der WO-A 99/01489 zu entnehmen.

Weiterhin eignen sich auch Pfropfpolymerisate mit mehreren "weichen" Stufen W und/oder mehreren "harten" Stufen H (sog. mehrschalige Morphologie), z.B. des Aufbaus von innen nach außen a1)-a2)-a1)-a2) = WHWH, a2)-a1)-a2) = HWH, oder a2)-a1)-a2)-a2) = HWHH, vor allem im Falle größerer Teilchen. Dabei können bei jeder der genannten Morphologien die mehrfach enthaltenen Stufen al) nach Art und/oder Menge der Monomeren gleich oder verschieden sein. Gleiches gilt für die mehrfach enthaltenen Stufen a2).

Soweit bei der. Pfropfung nicht gepfropfte Polymere aus den Monomeren a2) entstehen, werden diese Mengen, die in der Regel unter 10 Gew.-% von a2) liegen, der Masse des Pfropfpolymerisates A und nicht der Hartmatrix B zugeordnet.

Die Herstellung der Pfropfpolymerisate A kann auf verschiedene Weise durchgeführt werden. Bevorzugt wird A in Emulsion, in mikroemulsion, in Miniemulsion, in Suspension, in Mikrosuspension, oder in Minisuspension hergestellt, also in Gegenwart einer wässrigen Phase. jedoch kann man A auch durch Pälluhgspolymerisation, in Masse öder in Lösung herstellen. Alle Polymerisationsverfahren können kontinuierlich oder diskontinuierlich durchgeführt werden.

Bei der bevorzugt angewandten Emulsionspolymerisation und ihren Varianten (Mikroemulsion, Miniemulsion) werden die Monomeren in Wasser emulgiert, wozu Emulgatoren mitverwendet werden. Die für die Stabilisierung der Emulsion geeigneten Emulgatoren sind seifenartige Hilfsstoffe, welche die Monomertröpfchen umhüllen und auf diese Weise vor dem Zusammenlaufen schützen.

Als Emulgatoren eignen sich die dem Fachmann bekannten anionischen, kationischen und neutralen (nicht-ionogenen) Emulgatoren. Anionische Emulgatoren sind z.B. Alkalimetallsalze von höheren Fettsäuren mit 10 bis 30 C-Atomen wie Palmitin-, Stearin- und Ölsäure, Alkalimetallsalze von Sulfonsäuren mit z.B. 10 bis 16 C-Atomen, insbesondere Natriumsalze von Alkyl- oder Alkylarylsulfonsäuren, Alkalimetallsalze von Halbestern der Phthalsäure, und Alkalimetallsalze von Harzsäuren wie Abietinsäure. Kationische Emulgatoren sind z.B. Salze langkettiger, insbesondere ungesättigter Amine mit 12-18 C-Atomen, oder quaternäre AmmoniumVerbindungen mit längerkettigen Olefin- oder Paraffinresten (also Salze quaternisierter Fettamine). Neutrale Emulgatoren sind z.B. ethoxylierte Fettalkohole, ethoxylierte Fettsäuren oder ethoxylierte Phenole und Fettsäureester von mehrwertigen Alkoholen wie Pentaerythrit oder Sorbit.

Für die Emulsionspolymerisation werden bevorzugt Initiatoren verwendet, die in dem Monomeren schlecht löslich, in Wasser dagegen gut löslich sind. Es werden daher bevorzugt Peroxosulfate wie Kalium-, Natrium- oder Ammoniumperoxodisulfat verwendet, oder auch Redox-Systeme, insbesondere solche auf Basis von Hydroperoxiden wie Cumolhydroperoxid, Dicumylperoxid, Benzylperoxid oder Laurylperoxid.

Bei der Verwendung von Redox-Systemen werden wasserlösliche Metallverbindungen mitverwendet, deren Metallkationen leicht die Oxidationsstufe wechseln können, z.B. Eisensulfathydrat. üblicherweise werden auch.Komplexbildner wie Natriumpyrophosphat oder Ethylendiamintetraessigsäure mitverwendet; die ein Ausfallen schwerlöslicher Metallverbindungen bei der Polymerisation verhindern. Als Reduktionsmittel bei Redox-Systemen werden in der Regel organische Verbindungen wie Dextrose, Glucose und/oder Sulfoxylate verwendet.

Als weitere Zusatzstoffe können bei der Polymerisation Puffersubstanzen (nachfolgend kurz als Puffer II bezeichnet) wie Na₂HPO₄ / NaH₂PO₄ oder Na-citrat/Citronensäure verwendet werden, um einen im wesentlichen konstant bleibenden pH-Wert einzustellen. Diese Puffer II werden während der Polymerisation von A verwendet und sind nicht zu verwechseln mit den pH-Puffern (Puffer I, siehe weiter unten), die erfindungsgemäß nach Abschluß der Polymerisation der Komponenten A und B, vor oder während des Vermischens der fertigen Polymere A und B verwendet werden. Die Puffer I und II können chemisch gleich oder verschieden sein.

Weiterhin können Molekulargewichtsregler, etwa Mercaptane wie t-Dodecylmercaptan, oder Ethylhexylthioglycolat mitverwendet werden. Diese weiteren Zusatzstoffe können, ebenso wie die Emulgatoren und Initiatoren bzw. Redoxsysteme, kontinuierlich oder diskontinuierlich am Anfang und/oder während der Herstellung der Emulsion und/oder während der Polymerisation, zugefügt werden.

Die genauen Polymerisationsbedingungen, insbesondere Art; Menge und Dosierung des Emulgators und der anderen Polymerisationshilfsstoffe werden bevorzugt so gewählt, daß der erhaltene Latex des Pfropfpolymerisates eine mittlere Teilchengröße, definiert durch den d₅₀-Wert der Teilchengrößenverteilung, von 50 bis 1000, bevorzugt 50 bis 800 und besonders bevorzugt 80 bis 700 nm aufweist.

Die Teilchengrößenverteilung kann z.B. monomodal oder bimodal sein. Bevorzugt wird eine bimodale Teilchengrößenverteilung durch eine (teilweise) Agglomeration der Polymerteilchen erzielt. Dazu kann beispielsweise wie folgt vorgegangen werden: Man polymerisiert die Monomeren a1), welche den Kern aufbauen, bis zu einem Umsatz von üblicherweise mindestens 90, bevorzugt größer 95 %, bezogen auf die eingesetzten Monomeren. Der erhaltene Kautschuklatex hat in der Regel eine mittlere Teilchengröße d₅₀ von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates. Vorzugsweise werden Dispersionen von Copolymerisaten von (C₁-C₄-Alkyl)estern der Acrylsäure, vorzugsweise von Ethylacrylat, mit 0,1 bis 10 Gew.-% polare Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 94-96 % Ethylacrylat und 4-6 % Methacrylamid. Die Konzentration der Acrylesterpolymerisate in der zur Agglomeration verwendeten Dispersion soll im allgemeinen zwischen 3 und 40 Gew.-% liegen. Unter den genannten Bedingungen wird nur ein Teil der Kautschukteilchen agglomeriert, so daß eine bimodale Verteilung entsteht. Der Anteil der Teilchen, die im agglomerierten Zustand vorliegen, kann durch Art, Menge und Zugabeweise der verwendeten Agglomerier-Dispersion gesteuert werden. Er liegt üblicherweise zwischen 5 und 99 %, insbesondere 10 bis 95 %.

An die Agglomeration schließt sich die bereits beschriebene Polymerisation der Pfropfstufe a2) an.

Man nimmt die Emulsionspolymerisationsreaktion in der Regel unter langsamem oder mäßigem Rühren vor.

Die Aufarbeitung der Dispersion des Pfropfpolymerisates A erfolgt in an sich bekannter Weise. Üblicherweise wird zunächst das Pfropfpolymerisat A aus der Dispersion ausgefällt, beispielsweise. durch Zugabe von fällend wirkenden Salzlösungen (wie Calciumchlorid, Magnesiumsulfat, Alaun) oder Säuren (wie Essigsäure, Salzsäure oder Schwefelsäure) oder auch durch Einfrieren (Gefrierkoagulation). Die wäßrige Phase kann in üblicher Weise, etwa durch Sieben, Filtrieren, Dekantieren oder Zentrifugieren, abgetrennt werden. Man erhält durch diese Abtrennung des Dispersionswassers in der Regel wasserfeuehte Pfropfpölymensate A mit einem Restwassergehalt von bis zu 60 Gew.-%, bezogen auf A, wobei das Restwasser z.B. sowohl am Pfropfpolymerisat äußerlich anhaften als auch darin eingeschlossen sein kann.

Das Pfropfpolymerisat kann danach erforderlichenfalls in bekannter Weise weiter getrocknet werden, z.B. durch Warmluft oder mittels eines Stromtrockners.

Ebenso ist es möglich, die Dispersion durch Sprühtrocknung aufzuarbeiten.

Die Mikroemulsionspolymerisation unterscheidet sich von der normalen Emulsionspolymerisation vor allem dadurch, daß aus den Monomeren, Wasser und den Emulgatoren eine Emulsion bereitet wird, indem man hohe Scherkräfte einwirken läßt. Dazu verwendet man Homogenisatoren, die dem Fachmann bekannt sind. Die Miniemulsionspolymerisation unterscheidet sich von der normalen Emulsionspolymerisation und der Mikroemulsionspolymerisation vor allem dadurch, daß die Partikel üblicherweise durch eine Kombination von ionischen Emulgatoren und Co-Emulgatoren gegen das Zusammenlaufen stabilisiert werden. Bei der Miniemulsion wird das Gemisch aus Monomeren, Wasser, Emulgatoren und Co-Emulgatoren hohen Scherkräften ausgesetzt, wodurch die Komponenten innig vermischt werden. Anschließend wird polymerisiert. Als Co-Emulgatoren werden üblicherweise langkettige Alkane wie Hexadecan oder langkettige Alkohole wie Hexadecanol (Cetylalkohol) oder Dodecanol eingesetzt.

Bei der gleichfalls bevorzugt angewandten Suspensionspolymerisation und ihren Varianten (Mikrosuspension, Minisuspension) werden die Monomeren in Wasser suspendiert, wozu Schutzkolloide mitverwendet werden. Als Schutzkolloide eignen sich Cellulosederivate wie Carboxymethylcellulose und Hydroxymethylcellulose, Poly-N-Vinylpyrrolidon, Polyvinylalkohol und Polyethylenoxid, anionische Polymere wie Polyäcrylsäure und deren Copolymere und kationische wie Poly-N-vinylimidazol. Die Menge dieser Schutz-, kolloide beträgt vorzugsweise 0,1 bis 5 Gew.-%, bezogen auf die Gesamtmasse der Emulsion. Bevorzugt werden ein oder mehrere Polyvinylalkohole als. Schutzkolloid verwendet, insbesondere solche mit einem Hydrolysegrad unter 96 mol-%.

Man kann zusätzlich zu den Schutzkolloiden kolloidale Kieselsäure in konzentration von in der Regel 0,-2 bis 5 Gew.-%, bezogen auf die Menge der Dispersion, mitverwenden.

Für. die Suspensionspolymerisation sind Initiatoren mit einer Halbwertszeit von einer Stunde, wenn die Temperatur bei 40 bis 150°C liegt, und die in den Monomeren merklich lösliche in Wasser dagegen schlecht löslich sind, bevorzugt. Es werden daher organische Peroxide, organische Hydroperoxide, Azoverbindungen und/oder Verbindungen mit C-C-Einfachbindungen als Initiatoren RI verwendet. Ebenso werden als radikalische Polymerisationsinitiatoren Monomere verwendet, die bei erhöhter Temperatur spontan polymerisieren. Es können auch Mischungen der genannten Initiatoren RI verwendet, werden. Bei den Peroxiden sind diejenigen mit hydrophoben Eigenschaften bevorzugt. Ganz besonders bevorzugt sind Dilaurylperoxid und Dibenzoylperoxid. Als Azoverbindungen werden 2,2'Azobis(2-methylbutyronitril) und 2,2'-Azobis(isobutyronitril) bevorzugt. Als Verbindungen mit labilen C-C-Bindungen verwendet man bevorzugt 3 ,4-Dimethyl-3,4-diphenylhexan und 2,3-Dimethyl-2,3-diphenylbutan.

Man nimmt die Polymerisationsreaktion in der Regel unter langsamem oder mäßigem Rühren vor.

Für das Abtrennen des Wassers vom Kautschuk gilt das oben zur Emulsionspolymerisation Gesagte.

Die Mikrosuspensionspolymerisation unterscheidet sich von der normalen Suspensionspolymerisation vor allem dadurch, daß durch Einwirkung hoher Scherkräfte eine feinteilige Suspension bereitet wird. Einzelheiten wurden bereits bei der Mikroemulsionspolymerisation beschrieben. Die Minisuspensionspolymerisation unterscheidet sich von der normalen Suspensionspolymerisation und der Mikrosuspensionspolymerisation vor allem dadurch, daß die Partikelgrößen in der Regel zwischen denen der Suspensions- und der Mikrosuspensionspolymerisation liegen.

Bei ebenfalls möglichen Ausführung als Fällungspolymerisation sind die eingesetzten Monomere in der kontinuierlichen Phase (z.B. Lösungsmittel oder Lösungsmittelgemisch) löslich, die entstehenden Polymere sind jedoch nicht oder nur begrenzt löslich und fallen daher während der Polymerisation aus. Auch Substanzpolymerisationen, bei denen das entstehende Polymer im Monomer unlöslich ist und daher ausfällt, sind möglich. Je nach Reaktionsmedium sind die bei der Emulsions- bzw. Suspensionspolymerisation beschriebenen Initiatoren möglich. Es kann auch thermisch initiiert werden.

Bei der möglichen Ausführung als Massepolymerisation werden die Monomeren ohne Zugabe eines Reaktionsmediums, unter Verwendung der genannten monomerlöslichen Initiatoren polymerisiert, d.h. die Monomeren sind das Reaktionsmedium. Es. kann auch thermisch initiiert werden.

Die mögliche Ausführung als Lösungspolymerisation unterscheidet sich von der Massepolymerisation vor allem dadurch, daß ein organisches Lösungsmittel wie Cyclohexan, Ethylbenzol, Toluol oder Dimethylsulfoxid zur Verdünnung der Monomeren mitverwendet wird. Es können auch die genanten Initiatoren eingesetzt werden, oder es kann thermisch initiiert werden

Das Verfahren zur Herstellung der Pfropfpolymerisate kann auch als kombiniertes Verfahren ausgeführt werden, bei dem mindestens zwei der zuvor beschriebenen Polymerisationsverfahren miteinander kombiniert werden. Hier sind insbesondere Masse/Lösung, Lösung/Fällung, Masse/Suspension und Masse/Emulsion zu nennen, wobei mit dem erstgenannten begonnen und mit dem letztgenannten beendet wird.

Polymere, die in Masse oder in Lösung oder auf andere Weise in Abwesenheit von Wasser hergestellt werden, müssen für das erfindungsgemäße Verfahren in Wasser dispergiert werden. Dies erfolgt durch übliche Dispergerverfahren, wobei übliche Hilfsstoffe zur Herstellung und Stabilisierung der Polymerdispersion mitverwendet werden können.

### Das thermoplastische Polymer B

Als thermoplastisches Polymeres B ist jedes Polymere mit thermoplastischen Eigenschaften geeignet. Solche Polymere werden. beispielsweise im Kunststoff-Taschenbuch, Hrg. Saechtling, 25. Ausgabe, Hanser-Verlag München 1992, insbesondere Kap. 4, und im Kunststoff-Handbuch, Hrg. G. Becker und D. Braun, Bände 1 bis 11, Hanser-Verlag München 1966 - 1996, beschrieben. Im Kunststoff-Taschenbuch von Saechtling werden auch Bezugsquellen genannt.

Bevorzugt sind Polymere B, die mit der Pfropfstufe des Pfropf-Polymerisats A vertraglich oder zumindest teilverträglich sind.

Im Falle unverträglicher oder schlecht verträglicher Polymere kann man die bekannten Veträglichkeitsvermittler mitverwenden.

Nachstehend werden einige bevorzugte Polymere B näher erläutert.

### 1. Vinylaromatische Polymere und Polymere auf Basis von Methylmethacrylat

Das gewichtsmittlere Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Bevorzugte vinylaromatische bzw. auf MMA basierende thermoplastische Polymere B werden erhalten durch Polymerisation eines. Monomerengemisches aus, bezogen auf B),
b1) 50 bis 100, bevorzugt 60 bis 95 und besonders bevorzugt 60 bis 90. Gew.-% einer Styrolverbindung der bereits genannten allgemeinen Formel I
   oder eines (C₁-C₈-Alkyl)esters der Acrylsäure oder (bevorzugt) der Methacrylsäure,
   oder Mischungen der Styrolverbindung und des (C₁-C₈-Alkyl)esters der Acrylsäure oder Methacrylsäure,
b2) 0 bis 40, vorzugsweise 5 bis 38 Gew.-% Acrylnitril oder Methacrylnitril oder deren Mischungen, und
b3) 0 bis 40, vorzugsweise 0 bis 30 Gew.-% von einem oder mehreren weiteren monoethylenisch ungesättigten, von b2) verschiedenen Monomeren.

Bevorzugt hat die vinylaromatische Komponente B eine Glasübergangstemperatur T_{g} von 50°C oder darüber. Das vinylaromatische Polymere B ist demnach ein hartes Polymeres.

Als Styrolverbindung der allgemeinen Formel (I) (Komponente b1)) setzt man vorzugsweise Styrol, alpha-Methylstyrol sowie außerdem mit C₁-C₈-Alkyl kernalkylierte Styrole wie p-Methylstyrol oder tert.-Butylstyrol, ein. Styrol ist besonders bevorzugt. Es können auch Mischungen der genannten Styrole, insbesondere von Styrol und alpha-Methylstyrol, verwendet werden.

Anstelle der Styrolverbindungen oder in Mischung mit ihnen kommen C₁- bis C₈-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol, 2-Ethylhexanol und n-Butanol ableiten. Bevorzugt sind Methacrylsäureester. Besonders bevorzugt ist Methylmethacrylat (MMA).

Eine bevorzugte Komponente B auf Basis von MMA ist entweder ein MMA-Homopolymer (100 Gew.-% MMA), oder ein MMA-Copolymer aus mindestens 60, bevorzugt mindestens 80 und insbesondere mindestens 90 Gew.-% MMA und entsprechend bis zu 40, bevorzugt bis zu 20 und insbesondere bis zu 10 Gew.-% Comonomeren, insbesondere Alkylacrylaten. Geeignete Alkylacrylate sind Acrylsäureester mit 1 bis 8 C-Atomen im Alkylrest, wie Methyl-, Ethyl-, Propyl-, n-Butyl-, n-Pentyl-, n-Hexyl-, n-Heptyl-, n-Octyl-, 2-Ethylhexylacrylat oder deren Mischungen. Besonders bevorzugt als Alkylacrylat-Comonomer ist Methylacrylat. Die genannten MMA-Copolymere haben bevorzugt ein gewichtsmittleres Molekulargewicht M_{w} von über 50000, insbesondere über 75000 und ganz besonders bevorzugt über 100000 g/mol.

Weiterhin kann die Komponente B auf Kosten der Monomeren b1) und b2) ein oder mehrere weitere, monoethylenisch ungesättigte Monomere b3) enthalten, welche die mechanischen und thermischen Eigenschaften von B in einem gewissen Bereich variieren. Als Beispiele für solche Comonomere seien genannt:
N-substituierte Maleinimide wie N-Methyl-, N-Phenyl-. und N-Cyclohexylmaleinimid;
Acrylsäure, Methacrylsäure, weiterhin Dicarbonsäuren wie Maleinsäure, Fumarsaüre und Itaconsäure sowie deren Anhydride wie Maleinsäureanhydrid;
Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;
aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenöxyethylacrylat und 2-Phenoxyethylmethacrylat;
ungesättigte Ether wie Vinylmethylether,
sowie Mischungen dieser Monomeren.

Bevorzugte Komponenten B sind beispielsweise Polystyrol, und Copolymere aus Styrol und/oder alpha-Methylstyrol und einem oder mehreren der unter b1) bis b3) genannten anderen Monomeren. Bevorzugt sind dabei Methylmethacrylat, N-Phehylmaleinimid, Maleinsäureanhydrid und Acrylnitril, besonders bevorzugt Methylmethacrylat und Acrylnitril. Eine weitere bevorzugte Komponente B ist Polymethylmethacrylat (PMMA).

Als Beispiele für bevorzugte Komponenten B seien genannt:
- B/1:: Polystyrol,
- B/2:: Copolymeres aus Styrol und Acrylnitril,
- B/3:: Copolymeres aus alpha-Methylstyrol und Acrylnitril,
- B/4:: Copolymeres aus Styrol und Methylmethacrylat,
- B/5:: PMMA,
- B/6:: Copolymeres aus MMA und Methylacrylat,
- B/7:: Copolymeres aus Styrol und mindestens einem der Monomere Maleinsäureanhydrid, Acrylnitril, und ganz oder teilweise imidiertem Maleinsäureanhydrid,

Besonders bevorzugt beträgt der Anteil an Styrol oder alpha-Methylstyrol, oder der Anteil der Summe aus Styrol und alpha-Methylstyrol, mindestens 40, insbesondere mindestens 60 Gew.-%, bezogen auf die Komponente B.

Enthält die Komponente B bevorzugt Styrol und Acrylnitril, so entstehen die bekannten handelsüblichen SAN-Copolymeren. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 2000000 (Gewichtsmittel).

Die genannten Polymere B kann man in an sich' bekannter Weise, z.B. durch Substanz-, Lösung- Suspensions-, Fällungs- oder Emulsionspolymerisation erhalten. Einzelheiten dieser Verfahren sind z.B. im Kunststoffhandbuch, Hrg. Vieweg und Daumiller, Carl-Hanser-Verlag München, Bd. 1 (1973), S. 37 bis 42 und Bd. 5 (1969), S. 118 bis 130, in Ullmanns Encyklopädie der technischen Chemie, 4. Aufl., Verlag Chemie Weinheim, Bd. 19, S. 107 bis 158 "Polymerisationstechnik", sowie für MMA-Homo- und Copolymere auch im Kunststoffhandbuch, Hrg. Vieweg/Esser, Bd. 9 "Polymethacrylate", Carl-Hanser-Verlag München 1975, beschrieben.

### 2. Polyester

Geeignete Polyester sind an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclo-hexandicarbonsäuren ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat (PET), Polyethylennaphthalat und Polybutylenterephthalat (PBT) bevorzugt.

Die Viskositätszahl der Polyester liegt im allgemeinen im Bereich von 60 bis 200 ml/g, gemessen in einer 0,5 gew.-%igen Lösung in einem Phenol/o-Dichlorbenzol-Gemisch (Gew.-Verh. 1:1) bei 25°C.

Die vorstehend unter 1. und 2. genannten Polymere B können alleine oder in Mischung miteinander verwendet werden.

Die unter 1. und 2. genannten Polymere B können jedoch auch in Mischung mit den nachfolgend genannten Polymeren 3. und 4. eingesetzt werden. Die unter 3. und 4. genannten Polymere zählen demnach ebenfalls zur Komponente B, werden jedoch zusammen mit mindestens einem der unter 1. und 2. genannten Polymere B verwendet.

### 3. Polycarbonate (PC)

Geeignete Polycarbonate sind an sich bekannt. Sie sind z.B. entsprechend den Verfahren der DE-B-1 300 266 durch Grenzflächen-Polykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen- wie auch im folgenden - als Bisphenol A bezeichnet.

Anstelle von Bisphenol A können auch andere aromatische Dihydroxyverbindungen verwendet werden, insbesondere 2,2-Di (4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 Mol-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan)

### 4. Polyamide (PA)

Geeignet sind Polyamide mit aliphatischem teilkristallihem oder teilaromatischem sowie amorphem Aufbau jeglicher Art und deren Blends, einschließlich Polyetheramiden wie Polyetherblockamiden.

Unter Polyamiden sollten alle bekannten Polyamide verstanden werden.

Solcher Polyamide weisen im allgemeinen eine Viskositätszahl von 90 bis 350, vorzugsweise 110 bis 240 ml/g auf bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 13 Ringgliedern ableiten, wie polycaprolactam, Polycapryllactam und Polylaurinlactam, sowie Polyamide, die durch Umsetzung von Dicarbonsäureh mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure. Azelainsäure, Sebacinsäure, Dodecandisäure (= Decandicarbonsäure) und Terephthal- und/oder Isophthalsäure als Säuren genannt. Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem. Anteil von 5 bis 95 Gew.-% an Caprolactam-Einheiten: PA 6, PA 66 und Copolyamide 6/66 sind besonders bevorzugt.

Außerdem seien auch noch Polyamide erwähnt, die z.B. durch Kondensation von 1,4-Diaminobutan mit Adipinsäure bei erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die. Herstellung der teilaromatischen Copolyamide mit niedrigem. Triamingehalt kann nach den in den EP-A 129 195 und 129 196 beschriebenen Verfahren erfolgen.

Die nachfolgende nicht abschließende Aufstellung enthält die genannten, so wie weitere geeignete Polyamide (dahinter sind die Monomeren angegeben):
- PA 46: Tetramethylehdiamin, Adipinsäure
- PA 66: Hexamethylendiamin, Adipinsäure
- PA 69: Hexamethylendiamin, Azelainsäure
- PA. 610: Hexamethylendiamin, Sebacinsäure
- PA 612: Hexamethylendiamin, Decandicarbonsaure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA MXD6: m-Xylylendiamin, Adipinsäure
- PA TMDT: Trimethylhexamethylendiamin, Terephthalsäure
- PA 4: Pyrrolidon
- PA 6: ε-Caprolactam
- PA 7: Ethanolactam
- PA 8: Capryllactam
- PA 9 .: 9-Aminopelargonsäure
- PA 11: 11-Aminoundecansäure
- PA 12: Laurinlactam

Diese Polyamide und ihre Herstellung sind bekannt. Einzelheiten zu ihrer Herstellung findet der Fachmann in Ullmanns Encyklopädie der Technischen Chemie, 4. Auflage, Bd. 19, S. 39-54, Verlag Chemie, Weinheim 1980, sowie Ullmanns Encyclopedia of Industrial Chemistry, Vol. A21, S. 179-206, VCH Verlag, Weinheim 1992, sowie Stoeckhert, Kunststofflexikon, 8. Auflage, S. 425-428, Hanser Verlag München 1992 (Stichwort "Polyamide" und folgende).

### Bevorzugte Verfahrensprodukte, Zusatzstoffe

Bevorzugt sind die Spritzgußformteile aus kautsehukhaltigen thermoplastischen Formmassen die aus den Komponenten A und B, 5 bis 80, insbesondere 10 bis 60 und besonders bevorzugt 15 bis 50 Gew.-% kautschukelastische Polymerisate A und 20 bis 95, insbesondere 40 bis 90 und besonders bevorzugt 50 bis 85 Gew.-% thermoplastische Polymere B, jeweils bezogen auf die kautschukhaltige thermoplastischen Formmasse, sind.

Besonders bevorzugt sind die kautschukhaltigen thermoplastischen Formmassen aus den Komponenten A und B, ein Acrylnitril-Butadien-Styrol-Polymer (ABS), ein Acrylnitril-Styrol-Acrylester-Polymer (ASA), ein Methylmethacrylat-Acrylnitril-Butadien-Styrol-Polymer (MABS), oder ein Acrylnitril-(Ethylen-Propylen)-Styrol-Polymer (AES).

Bei den vorgenannten Formmassen ABS, ASA, MABS und ARS beträgt der Anteil des kautschukelastischen Polymerisats A (z.B. Dien-, Acrylat-, EPM- bzw. EPDM-Pfropfkautschuk) bevorzugt 5 bis 80, insbesondere 10 bis 60 und ganz besonders bevorzugt 15 bis 50 Gew.-%, bezogen auf die kautschukhaltige thermoplastische Formmasse. Der Anteil des thermoplastischen Polymeren B (z.B. SAN bzw. PMMA) beträgt bevorzugt 20 bis 95, insbesondere 40 bis 90 und ganz besonders bevorzugt 50 bis 85 Gew.-%, bezogen auf die kautschukhaltige thermoplastische Formmasse.

Zusätzlich zu den Komponenten A und B können die kautschukhaltigen thermoplastischen Formmassen als Komponente C Zusatzstoffe enthalten. Die Zusatzstoffe C sind bevorzugt mit einem Anteil von 0 bis 50, besonders bevorzugt 0,1 bis 45 und ganz besonders bevorzugt 0,2 bis 30 Gew.-%, bezogen auf die Summe der Komponenten A bis C, in den thermoplastischen Formmassen enthalten sind.

Die Komponente C umfaßt Gleit- oder Entformungsmittel, Wachse, Farbmittel (Pigmente, Farbstoffe), Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Geeignete Gleit- und Entformungsmittel sind z.B. Stearinsäuren, Stearylalkohol, Stearinsäureester oder -amide sowie Siliconöle, Montanwachse und solche auf Basis von Polyethylen und Polypropylen.

Pigmente sind beispielsweise Titandioxid, Phthalocyanine, Ultramarinblau, Eisenoxide oder Ruß, sowie die gesamte Klasse der organischen Pigmente. Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren oder MMA-Homo- und -Copolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden. Ebenso ist roter Phosphor geeignet. Geeignete Antioxidantien sind insbesondere sterisch gehinderte einkernige oder mehrkernige phenolische Antioxidantien, die auf verschieden Weise substituiert und auch über Substituenten verbrückte sein können. Hierzu zählen neben monomeren auch oligomere Verbindungen, die aus mehreren phenolischen Grundkörpern aufgebaut sein können. Ferner kommen Hydrochinone und Hydrochinonanaloge, substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden, etwa Topanol®, Irganox®, Lowinox®, oder Ralox®.

Zusammen mit den zuvor beispielhaft genannten phenolischen Antioxidantien können sogenannte Costabilisatoren mitverwendet werden, insbesondere phosphor- oder schwefelhaltige Costabilisa-toren. Solche P- oder S-haltigen Costabilisatoren sind dem Fachmann bekannt und handelsüblich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® (Ciba) oder Uvinul® (BASF) kommerziell erhältlich sind.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem HaftVermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calcium-Silikate wie Wollastonit und Kaolin.

Geeignete Antistatika sind beispielsweise Aminderivate wie N,N-Bis (hydroxyalkyl) alkylamine oder -alkylenamine, Polyethylenglycolester, Copolymere aus Ethylenglycol und Propylenglycol, und Glycerinmono- und -distearate, sowie deren Mischungen.

Die einzelnen Zusatzstoffe C werden in den jeweils üblichen Mengen verwendet, so daß sich nähere Angaben hierzu erübrigen.

Es versteht sich, daß sich die Summe der Komponenten A, B und - sofern enthalten - C, auf 100 Gew. -% ergänzt.

### Das Verfahren

Bei dem erfindungsgemäßen verfahren werden die Komponenten A und B durch Polymerisation der entsprechenden Monomeren hergestellt, wobei die Komponente A nach der Polymerisation in einer wässrigen Phase dispergiert vorliegt. Die fertigen Polymere A und B werden miteinander vermischt. Erfindungswesentlich ist, daß man nach Abschluß der Polymerisation von Komponente A der wässrigen Phase mindestens ein pH-Puffersystem zufügt.

Wie weiter unten näher erläutert wird, kann "pH-Puffersystem" auch bedeuten, daß man nur eine Puffferkomponente zufügt und sich die zweite Pufferkomponente in der wässrigen Phase bildet.

Bevorzugte pH-Puffersysteme sind solche, die in einer wässrigen Lösung einen pH-Wert (bei 25°C) von 1 bis 12, bevorzugt 3 bis 12 und insbesondere 5 bis 12, einstellen. Derartige pH-Puffersysteme, nachfolgend kurz als Puffer I bezeichnet, sind dem Fachmann bekannt und bestehen in der Regel aus einem Protonendonator (Brönsted-Säure) und einem Protonenakzeptor (Brönsted-Base)

Diese Puffer I können mit den bei der Komponente A bereits genannten Puffern II identisch sein, die bei der Herstellung der Komponente A durch Emulsionspolymerisatiöh als Zusatzstoffe mitverwendet werden können. Jedoch können die dort genannten Puffer. I und die hier verwendeten Puffer II auch verschieden voneinander sein.

Die Puffer I können aus anorganischen Verbindungen bestehen, z.B. Dihydrogenphosphat/Hydrogenphosphat oder aus organischen Verbindungen, z.B. Barbital/Barbitalnatrium, oder aus anorganischen und organischen Verbindungen. Geeignete Puffer I bestehen oftmals aus einer schwachen Säure und einem dissoziierten Neutralsalz derselben Säure, z.B. Essigsäure/Natriumacetat. Jedoch sind auch Puffer I aus einem dissoziierten Neutralsalz einer schwachen Base und dieser schwachen Base geeignet, z.B. Ammoniumchlorid/Ammoniak. Die Säure und die Base müssen nicht auf dieselbe Verbindung zurückgehen, vielmehr sind auch Puffer I wie z.B. Barbital/Natriuaiacetat geeignet. Auch sind sog. Zwitterionen-Puffer geeignet. Sie enthalten sekundäre und tertiäre Aminogruppen als Protonendonatoren und Sulfonsäure- oder Carboxygruppen als Protonenakzeptoren. Beispiels sind der ACES-Puffer (2-[(Carbamoylmethyl)-amino]-ethansulfonsäure) oder der TES-Puffer (2-{[Tris(hydroxymethyl)methyl]-amino}-ethansulfonsäure).

Bevorzugte Puffer I sind ausgewählt aus Barbital/Barbitalnatrium, Barbital/Natriumacetat, sowie besonders bevorzugt Hydrogencarbonat/Carbonat, Citronensäure/Citrat, Essigsäure/Acetat, Hydrogenphosphat/Phosphat, Dihydrogenphosphat/Hydrogenphosphat, Borsäure/Borat, Ammonium/Ammoniak, Citrat/Borax, Phthalat/Alkalimetallhydroxid, Phthalat/Salzsäure, Citrat/Alkalimetallhydroxid, Citronensäure/Hydrogenphosphat, oder deren Mischungen.

In einer bevorzugten Ausführungsform werden die Gegenionen der genannten Ionen derart ausgewählt, daß das aus Kationen und Anio-: nen aufgebaute Salz wasserlöslich ist. Dabei bedeutet wasserlöslich, daβ das Salz bei 25 bis 80°C ganz oder überwiegend in Wasser gelöst vorliegt.

Für gute Wasserlöslichkeit geeignete Gegenkationen sind z.B. das Ammniumkation und Alkalimetalikationen wie Natrium und Kalium. Natrium und Kalium sind besonders bevorzugte Gegenkationen. Geeignete Gegenanionen (für das Ammoniumkation) sind z.B. Halogenidanionen wie Fluorid, Chlorid und Bromid und Anionen starker Säuren wie Nitrat und Sulfat. Chlorid ist ein bevorzugtes Gegenanion. Falls beide Pufferverbindungen ionisch sind, wie bei den Puffern Hydrogenphosphat/Phosphat und Dihydrogenphosphat/Hydrogenphosphat, so können die Gegenionen gleich (z.B. Dinatriumhydrogenphosphat/Trinatriumphosphat) oder verschieden (z.B. Kaliumdihydrogenphosphat/Dinatriumhydrogenphosphat) sein.

Besonders bevorzugt als Puffer I ist der Hydrogencarbonat/Carbonat-Puffer, der veraltet auch als Bicarbonat-Puffer bezeichnet wird. Hier reicht es oft aus, nur eine Pufferkomponente zuzugeben, da sich die andere Komponente in der sauren oder basischen wässrigen Phase, in der das Polymerisat A vorliegt, durch Protonierung bzw. Deprotonierung ausbildet (siehe Erläuterung weiter unten). Geeignete Hydrogencarbonate bzw. Carbonate sind die des Natriums, Kaliums und Ammoniums. Ganz besonders bevorzugt verwendet man den Puffer Natriumhydrogencarbonat/Natriumcarbonat.

Die Puffer I können durch Zusammengehen des Protonendonators und des Protonenakzeptors hergestellt werden Ebenso kann man die Puffer I herstellen, indem man eine weniger als äquimolare Menge einer starken Säure (Base) zum Protonenakzeptor (Protonendonator) zufügt, wodurch er protoniert (deprotoniert) und damit zum Protonendonator (Protonenakzeptor) wird. So kann man beispielsweise den Essigsäure/Acetat-Puffer herstellen, indem man entweder Essigsäure und Natriumacetat zusammengibt, oder indem man eine weniger als äquimolare Menge Salzsäure zu Natriumacetat hinzufügt, oder Natriumacetat zu einer sauren Lösung gibt, wodurch ein Teil des Acetats in Essigsäure überführt wird, oder indem man eine weniger als äquimolare Menge Natriumhydroxid zu Essigsäure hinzufügt, oder Essigsäure zu einer basischen Lösung gibt, wodurch ein Teil der Essigsäure in Acetat überführt wird.

Die Puffer I können in vielen Fällen - und besonders bevorzugt, weil einfach durchführbar - auch dadurch hergestellt, werden, daß man nur eine der Pufferkomponenten (entweder den Prptonendonator oder den Protonenakzeptor) zur wässrigen Dispersion der Komponente A zufügt. Durch den Protonengehalt (pH-Wert) der Dispersion wird ein Teil der Pufferkomponente protoniert bzw. deprotoniert, wodurch sich das Puffergleichgewicht einstellt. Beispielsweise kann man Natriumhydrogencarbonat einer basischen wässrigen Dispersion von A zugeben, die einen pH-Wert von 8 bis 10 hat. In der basischen Dispersion deprotoniert einen Teil des Hydrogencarbonats zu Carbonat und es entsteht der Hydrogencarbonat/Carbonat-Puffer.

Der Anspruchswortlaut "ein pH-Puffersystem zufügt" kann demnach auch bedeuten, daß nur eine Pufferkomponente zugefügt wird und sich die zweite Pufferkomponente in der wässrigen Phase bildet. Diese Ausführungsform ist ganz besonders bevorzugt.

Es versteht sich, daß auch Mischungen verschiedener Puffer I verwendet werden können. Die nachfolgenden Mengenangaben beziehen sich in diesem Fall auf die Gesamtmenge aller Puffer I.

In der Regel beträgt die eingesetzte Menge des Puffers I (Summe von Protonendonator und Protohenakzeptor) 0,01 bis 5, bevorzugt 0,05 bis 4 und besonders bevorzugt 0,08 bis 3 Gew.-%, bezogen auf die Komponente A. Dabei ist Komponente A als Feststoff gemeint, also reines. A ohne Dispersionswasser, anhaftendes und eingesehlossenes Wasser.

Der Puffer I kann zu einem beliebigen Zeitpunkt zugefügt werden, solange dieser Zeitpunkt nach Abschluß der Polymerisation der Komponente A und vor dem restlosen Entfernen der wässrigen Phase liegt. "Abschluß der Polymerisation" bedeutet, daß mindestens 95 Gew.-% der Pfropfmonomeren umgesetzt sind.

Zum Zeitpunkt der Zugabe des Puffers I muß zumindest ein Teil der wässrigen Phase noch vorhanden sein. Je nach Löslichkeit des Puffers in Wasser kann bereits das an einem wasserfeuchten kautschukelastischen Polymerisat A anhaftende bzw. eingeschlossene Restwasser ausreichend sein. D.h. das Polymerisat A muß nicht unbedingt in der wässrigen Phase "schwimmen", sondern ein wasserfeuchtes Polymerisat A kann für einen leichtlöslichen Puffer I bereits ausreichend wässrige Phase enthalten.

Man kann den Puffer I unverdünnt, oder gelöst bzw. dispergiert in einem Verdünnungsmittel wie Wasser, oder einer Mischung aus Wasser und organischen Lösungsmitteln wie Alkoholen zufügen. Im letztgenannten Fall wird das Lösungsmittel während des Vermischens oder in einem vor- oder nachgeschalteten Verfahrensschritt wieder entfernt, z .B. durch verdampfen bzw. Entgasen.

Erfindungsgemäß fügt man den Puffer I einer Komponente A hinzu, die in einer wässrigen Phase dispergiert oder zumindest noch wasserfeucht ist. Solche Komponenten. A sind insbesondere die bereits beschriebenen Pfropfkautschuke (Pfropfpolymerisate) aus Dienkautschuken, Acrylatkautschuken, EPM- bzw. EPDM-Kautschuken, und Siliconkautschuken, sofern die Kautschuke in wässriger Phase hergestellt werden, also insbesondere durch Emulsionspolymerisation, Suspensionspolymerisation und deren Mini- und Mikro-Verfahrensvarianten. Für diese Ausführungsform sind gut wasserlösliche Puffer I bevorzugt.

Die Zugabe des Puffers I kann beispielsweise vor der Koagulation des Kautschuks erfolgen. Dies ist ganz besonders bevorzugt. Eine bevorzugte Ausführungsform des Verfahrens ist demnach dadurch gekennzeichnet, daß man den Puffer I vor der Koagulation des kautschukelastischen Polymerisats A zufügt.

Die Zugabe kann auch während der Koagulation erfolgen; in diesem Fall werden Koagulationsmittel und Puffer I zeitgleich zugefügt. Dies ist ebenfalls ganz besonders bevorzugt.

Man kann den Puffer I auch nach der Koagulation des Kautschuks zufügen, beispielsweise während der Abtrennung der wässrigen Phase vom Kautschuk, wie sie oben bereits beschrieben wurde. Insbesondere kann man den Puffer I dem Wasser zufügen, das zum Waschen des koagulierten Kautschuks verwendet wird.

Das Vermischen der Komponenten A und B erfolgt in an sich bekannter, üblicher Weise beispielsweise durch gemeinsames Extrudieren, Kneten oder Verwalzen, wobei die Komponenten A und B notwendigenfalls zuvor aus der bei der Polymerisation erhaltenen Lösung oder aus der wäßrigen Dispersion isoliert worden sind.

Im Falle des Einmischens von Komponente A oder B in Form einer wäßrigen Dispersion bzw. einer wäßrigen oder nichtwäßrigen Lösung, wird das Wasser bzw. das Lösungsmittel über eine Entgasungseinheit aus der Mischvorrichtung, bevorzugt, einem Extruder, entfernt.

Als Mischvorrichtungen zum Vermischen von A und B sind beispielsweise diskontinuierlich arbeitende, beheizte Innenkneter mit oder ohne Stempel, kontinuierlich arbeitende Kneter wie z.B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.

In manchen Fällen bewirkt die beim Vermischen durch die Mischvorrichtung eingebrachte-mechanische Energie bereits ein Schmelzen der Mischung, so daß die Mischvorrichtung nicht beheizt werden muß. Ansonsten wird die Mischvorrichtung in der Regel beheizt.
Die Temperatur richtet sich nach den chemischen und physikalisehen Eigenschaften der Komponenten A und B, und ist so zu wählen, daß A und B ausreichend vermischt werden. Andererseits soll die Temperatur nicht unnötig hoch sein, um eine thermische Schädigung der Polymermischung zu vermeiden. Die eingebrachte mechanische Energie kann jedoch auch so hoch sein, daß die Mischvorrichtung sogar gekühlt werden muß. Üblicherweise betreibt man die Mischvorrichtung bei 150 bis 300, bevorzugt 180 bis 300°C.

In einer bevorzugten Ausführungsform erfolgt das Vermischen des Pfropfpolymerisates A mit dem. Polymerisat B in einem Extruder, wobei die Dispersion des Pfropfpolymerisates A ohne vorherige Abtrennung des Dispersionswassers direkt in den Extruder eindosiert wird. Das Wasser wird üblicherweise entlang des Extrudets über geeignete Entgasungsvorrichtungen entfernt. Als Entgasungsvorrichtungen können beispielsweise Entgasungsöffnungen, die mit Rückhalteschnecken versehen sein können (welche das Austreten der Polymermischung verhindern), eingesetzt werden.

In einer anderen, ebenfalls bevorzugten Ausführungsform, der sog. Feuchteininischung, erfolgt das Vermischen des Pfropfpolymerisates A mit dem Polymerisat B, in einem Extruder, wobei das Pfropf-Polymerisat A zuvor vom Dispersionswasser abgetrennt wird. Man erhält durch diese vorherige Abtrennung des Dispersionswassers wasserfeuchte Pfropfpolymerisate A mit einem Restwassergehalt von bis zu 60 Gew. -%, bezogen auf A, wobei das Restwasser z.B. sowohl am Pfropfpolymerisat äußerlich anhaften als auch darin eingeschlossen sein kann. Das vorhandene Restwasser kann dann, wie zuvor beschrieben, über Entgasungsvorrichtungen des Extruders als Dampf entfernt werden.

In einer besonders bevorzugten Ausführungsform der Peuchteininischung wird jedoch das Restwasser im Extruder nicht allein als Dampf entfernt, sondern es wird ein Teil des Restwassers mechanisch im Extruder entfernt und verlässt den Extruder in flüssiger Phase. Dieses spezielle Feuchteinmischungsverfahren sei nachfolgend näher beschrieben:

Das Pfropfpolymerisat wird zunächst vom Dispersionswasser z.B. durch Sieben, Auspressen, Filtrieren, Dekantieren, Sedimentieren, Zentrifugieren, oder durch eine teilweise thermische Trocknung, abgetrennt. Das auf diese Weise teilentwässerte, bis zu 60 Gew.-% Restwasser enthaltende Pfropfpolymerisat wird in den Extruder eindosiert. Das eindosierte Material wird von der Schnecke gegen ein als Hindernis wirkendes Stauelement gefördert, welches sich in der Regel am Ende eines "Abquetschabschnitts" befindet. Durch diese Stauzone wird ein Druck aufgebaut, der das Wasser aus dem Pfropfpolymerisat auspreßt ("abquetscht"). Man kann den Druck je nach dem rheologischen Verhalten des Kautschuks durch unterschiedliche Anordnung von Schnecken-, Knetelementen oder anderen Stauelementen aufbauen. Grundsätzlich sind alle handelsüblichen, dem Druckaufbau dienenden Vorrichtungselemente geeignet.

Beispielsweise seien als mögliche Stauelemente überschobene, fördernde Schneckenelemente, Schneckenelemente mit Steigung entgegen der Förderrichtung (bevorzugt), wozu auch Schneckenelemente mit Fördergewinden großer Steigung (Steigung größer ein Schneckendurchmesser) entgegen der Förderrichtung (sog. LGS-Elemente) zählen, Knetblöcke mit nichtfördernden Knetscheiben in unterschiedlicher Breite, Knetblöcke mit rückfördernder Steigung (bevorzugt), Knetblöcke mit fördernder Steigung, Zylinderscheiben, Exzenterscheiben und daraus konfigurierte Blöcke, neutrale Stauscheiben ("Drosselscheiben"), und mechanisch verstellbare Drosseln (Schiebegehäuse, Radialdrosseln, Zentraldrosseln), genannt. Es können auch zwei oder mehrere der Stauelemente miteinander kombiniert werden. Gleichfalls kann die Stauwirkung der Stauzone durch die Länge und die Intensität der einzelnen Stauelemente dem jeweiligen Pfropfkautschuk angepaßt werden.

Das im Abquetschabschnitt aus dem Pfropfpolymerisat ausgepreßte Wasser verläßt den Extruder ganz oder überwiegend in flüssiger Phase und nicht als Dampf. Der Abquetschabschnitt ist mit einer oder mehreren, im Regelfall unter Normaldruck oder Überdruck stehenden Entwässerungsöffnungen versehen. Bevorzugt sind die Entwässerungsöffnungen mit einer Vorrichtung versehen, die das Austreten des geförderten Pfropfpolymerisates A verhindern. Besonders bevorzugt werden dazu sog. Rückhalteschnecken verwendet. In einer besonders bevorzugten Ausführungsform werden als Entwässerungsöffnungen keine Seihergehäuse oder ähnliche, schnell verstopfende Bauteile wie etwa Siebe, verwendet, sondern Aussparungen oder Bohrungen im Extruderzylinder (Gehäuse).

In einer bevorzugteh Ausführungsform wird def Extruder in den Dosierabschnitten und in den Abquetschabschnitten nicht beheizt. In einer Ausführungsform wird der Extruder in diesen genannten Abschnitten gekühlt.

Das ausgepresste entwässerte Pfropfpolymerisat A wird über die Stauzonen hinweggefördert und gelangt in den nächsten Extruderabschnitt. Dies kann z.B. ein weiterer Abquetschabschnitt, oder ein Abschnitt zur Einmischung der Komponente B, oder ein Entgasungsabschnitt, sein.

Ganz besonders bevorzugt erfolgt die Abtrennung des Restwassers der Komponente A, und das Vermischen mit der Komponente B im selben Extruder. Dabei wird bevorzugt am Extruderanfang zunächst der Kautschuk A wie beschrieben durch Auspressen mechanisch entwässert, danach in der Extrudermitte die Komponehte B eingemischt, bevorzugt in Form einer Schmelze von B, und am Extruderende die Mischung von A und B durchmischt und ausgetragen.

Die im Einzelfall durch Kühlen bzw. Beheizen zu wählenden Temperaturen, und die Längen der einzelnen Abschnitte unterscheiden sich in Abhängigkeit der chemischen und physikalischen Eigenschaffen der Komponenten A und B und deren Mengenverhältnissen. Gleiches gilt auch für die Schneckenärehiahl, die innerhalb eines weiten Bereiches variieren kann. Nur beispielhaft sei eine Drehzahl der Extruderschnecken im Bereich von 100 bis 350 min⁻¹ genannt.

Einzelheiten zum Vermischen der Komponenten A und B im selben Extruder und zur Feuchteinmischung sind in der WO-A 99/01489 und der WO-A 98/13412 zu entnehmen.

Falls der Puffer I während des Vermischens der Komponenten A und B in einem Extruder zugefügt wird, kann man ihn an einer oder mehreren Stellen des Extruders einmischen.

Unabhängig von der verwendeten Mischvorrichtung und dem Zugabezeitpunkt gilt: Man kann den Puffer I beispielsweise diskontinuierlich als Gesamtmenge, oder aufgeteilt, in mehrere Portionen absatzweise zu verschiedenen Zeitpunkten, oder kontinuierlich während eines bestimmten Zeitintervalls zufügen werden. Die kontinuierliche Zugabe kann auch entlang eines Gradienten erfolgen, der z.B. auf- oder absteigend, linear oder exponentiell, stufenweise (Treppenfunktion) oder einer anderen mathematischen Funktion gehorchend sein kann.

Man kann also z.B. einen Teil des Puffers I der Dispersion der Komponente A vor der Koagulation, und einen weiteren Teil bei der Feuchteinmischung dem Extruder zugeben.

Falls mehrere Puffer I verwendet werden, können sie gemeinsam oder zeitlich getrennt voneinander zugefügt werden. Die beiden vorstehenden Absätze gelten entsprechend.

Die Zugabe der Puffer I erfolgt in der Regel mittels üblicher Dosiervorrichtungen, als Feststoff z.B. über Vibrationsrinnen, Dosierschnecken, Wendelförderer oder Dosierbänder, flüssig z.B. über Pumpen oder durch Gravitation.

Die nach dem erfindungsgemäßen Verfahren erhältlichen kautschukhaltigen thermoplastischen Formmassen köhhen durch Spritzgießen zu Spritzgußformteilen verarbeitet werden, wobei die Belagsbildung auf den Formteilen und in der Spritzgußform deutlich vermindert ist.

Die beim Spritzgießen oder Extrudieren sich ablagernden Formbeläge sind deutlich geringer als bei den Verfahren des Standes der Technik, insbesondere viel geringer als bei Mitverwendung von Magnesiumoxid. Der zum Entfernen des Formbelags erforderliche Maschinenstillstand ist deutlich geringer, d.h. eine Reinigungsabstellung ist wesentlich seltener erforderlich. Die aus den Formmassen hergestellten Formteile haben eine bessere Qualität und keine störenden Beläge.

### Beispiele:

### 1. Herstellung eines kautschukelastischen Pfropfpolymerisates A

### 1.1. Herstellung der Pfropfgrundlage a1)

43120 g Butadien wurden in Gegenwart von 432 g tert.-Dodecylmercaptan (TDM) 311 g Kaliumsalz, von C₁₂-C₂₀-Fettsäuren, 82 g Kaliumpersulfat, 147 g Natriumhydrogencarbonat und 58400 g Wasser bei 65°C zu einem Polybutadienlatex polymerisiert. Im Einzelnen wurde verfahren wie in der EP-A 62901, Bsp. 1, S. 9, Z. 20 - S. 10, Z. 6 beschrieben, wobei das TDM in mehreren Portionen zugegeben wurde. Der Umsatz betrug 95 %. Die mittlere Teilchengröße d₅₀ des Latex betrug 100 nm.

Zur Agglomeration des Latex wurden 35000 g des erhaltenen Latex bei 65°C durch Zugabe von 2700 g einer Dispersion (Feststoffgehalt 10 Gew.-%) aus 96 Gew.-% Ethylacrylat und 4 Gew.-% Methacrylsäureamid agglomeriert (partielle Agglomeration).

### 1.2. Herstellung der Pfropfauflage a2)

Dem agglomerierten Latex wurden 9000 g Wasser, 130 g Kaliumsalz von C₁₂-C₂₀-Fettsäuren und 17 g Kaliumperoxodisulfat zugefügt. Anschließend wurden 9500 g einer Mischung aus 80 Gew.-% Styrol und 20 Gew.-% Acrylnitril bei 75°C innerhalb von 4 Stunden unter Rühren zugefügt. Der Umsatz, bezogen auf die Pfropfmonomeren, war nahezu quantitativ.

Die erhaltene Pfropfpolymerisat-Dispersion mit bimodaler Teilchengrößenverteilung wies eine mittlere Teilchengröße d₅₀ von 140 nm und einen d₉₀-Wert von 420 nm auf. Ein erstes Maximum der Teilchengrößenverteilung lag im Bereich 50 bis 150 nm, ein zweites Maximum im Bereich 200 bis 600 nm.

Die erhaltene Dispersion wurde mit einer wässrigen Dispersion eines Antioxidans versetzt.

### 1. 3. Zugabe des pH-Puffersystems und Aufarbeitung der Dispersion

Der in Punkt 1.2 erhaltenen basischen Dispersion (pH-Wert etwa 8,8) wurde festes Natriumhydrogencarbonat zugefügt. Die Konzentration des Puffers betrug 0,1 Gew.-%, bezogen auf den Pfropfkautschuk A als trockener Feststoff (ohne Dispersionswasser).

Die Kautschukdispersion wurde anschließend durch Zugabe einer Magnesiumsulfatlösung koaguliert. Der koagulierte Kautschuk wurde vom Dispersionswasser abzentrifugiert und mit Wasser gewaschen. Man erhielt einen Pfropfkautschuk A mit ca. 30 Gew.-% anhaftendem bzw. eingesehlossenem Restwasser.

### 2. Herstellung eines thermoplastischen Polymeren B (Hartmatrix)

Es wurde ein thermoplastisches Polymerisat aus 76 Gew.-% Styrol und 24 gew.-% Acrylnitril nach dem Verfahren der kontinuierlichen Lösungspolymerisation hergestellt, wie es im Kunststoff-Handbuch, Hrg. R. Vieweg und G. Daumiller, Band V "Polystyrol", Carl-Hanser-Verlag München 1969, S 122 - 124, beschrieben ist. Die Viskositätszahl VZ betrug 67 ml/g, bestimmt nach DIN 53 726 bei 25°C an einer 0,5 gew-%ige Lösung in Dimethylformamid. Dies entsprach einer gewichtsmittleren Molmasse von etwa 150000 g/mol.

### 3. Abmischung der Komponenten A und B und Untersuchung der Formbelagsbildung

Der Restwasser enthaltende Pfropfkautschuk A wurde in einen Extruder Typ ZSK 40 von Fa. Werner und Pfleiderer eindosiert, dessen zwei Förderschnecken im vorderen Teil mit druckaufbauenden Stauelementen versehen waren. Ein erheblicher Teil des Restwassers wurde auf: diese Weise mechanisch ausgepresst und verließ den Extruder in flüssiger Form durch Entwässerungsöffnungen. Die Hartmatrix B wurde dem Extruder stromabwärts hinter den Stauzonen zugeführt und mit der entwässerten Komponente A innig vermischt. Das verbliebene Restwasser wurde über Entgasungsöffnungen im hinteren Teil des Extruders als Dampf entfernt. Der Extruder wurde bei 250 min⁻¹ und einem Durchsatz .von 80 kg/h betrieben. Die Mengen von A und B wurden so gewählt, daß die Formmasse 30 Gew.-% Pfropfkautschuk A enthielt. Die Formmasse wurde extrudiert und die erstarrte Formmasse wurde granuliert.

Aus dem Granulat wurden auf einer Spritzgußmaschine Aarburg Allrounder bei 250°C Schmelzetemperatur und 60°C Werkzeugoberflächentemperatur Gehäüseteile für ein elektronisches Bauteil hergestellt. Dazu wurde ein Werkzeug mit Intensivkühlung verwendet. Das Schußgewicht (Masse des pro Spritzgußvorgang eingespritzten Polymeren) betrug ca. 47 g und es wurden durchschnittlich 3 Gehäuseteile pro Minute hergestellt. Jedes Gehäuseteil wurde bezüglich der Oberflächengüte visuell beurteilt.

Sobald die Oberflächengüte unzureichend war, wurde die Spritzgußmaschine zu Reinigungszwecken abgestellt. Die Zeitspanne bis zu dieser Reinigungsabstellung diente als Maß für die Formbelagsbildung: Je länger die Zeitspanne bis zur ersten Reinigungsabstellung war, desto geringer war die Formbelagsbildung.

### 4. Nicht erfindungsgemäße Vergleichsbeispiele

Beispiel 1V: Weglassen des pH-Puffersystems

Das obige Beispiel wurde Wiederholt mit dem Unterschied, daß in Schritt 1.3 vor der Koagulation kein pH-Puffersystem zugefügt wurde.

### Beispiel 2V: Magnesiumoxid zur Verringerung des Formbelags

Vergleichsbeispiel 1V wurde wiederholt mit dem Unterschied, daß bei der Abmischung der Komponenten A und B (obiger Schritt 3) 0,15 Gew.-% Magnesiumoxid, bezogen auf die Summe von A und B, mitverwendet wurden.

### 5. Versuchsergebnisse

Die Tabelle fässt die Ergebnisse zusammen.

| Formmasse | Zeitspanne bis zur ersten Reinigungsabstellung [min] |
|---|---|
| erfindungsgemäß mit pH-Puffer | 3600 |
| Vergleichsbsp. 1V ohne pH-Puffer | 15 |
| Vergleichsbsp. 2V ohne pH-Puffer und mit Magnesiumoxid | 50 |

Fügt man nicht erfindungsgemäß den Formmassen keinen pH-Puffer hinzu, so ist die erste Reinigungsabstellung der Maschine bereits nach 15 min erforderlich.

Fügt man ebenfalls nicht erfindungsgemäß den Formmassen anstelle des pH-Puffers Magnesiumoxid hinzu, verlängert sich diese Zeitspanne auf 50 min, also ca. das Dreifache.

Hingegen liefert das erfindungsgemäße Verfahren Formmmassen, die erst nach 3600 min (= 60 Stunden) eine Reinigungsabstellung der Maschine erfordern, um den Formbelag zu entfernen. Diese Zeitspanne ist 240 mal länger als beim Vergleichsbeispiel 1V, und 72 mal länger als.beim Vergleichsbeispiel 2V.

Demnach ist der Effekt der Formbelagsverminderung bei dem erfindungsgemäßen Verfahren wesentlich stärker ausgeprägt als bei den Verfahren des Standes der Technik.

## Patentansprüche

1. Verfahren zur Verminderung des Formbelags bei der Herstellung von Spritzgußformteilen aus kautschukhaltigen thermoplastischen Formmassen, **dadurch gekennzeichnet, daß** maw zum Spritzguß kautschukhaltige thermoplastische Formmassen verwendet, die mindestens ein kautschukelastisches Polymerisat A und mindestens ein thermoplastisches Polymeres B umfassen, die durch Polymerisation hergestellt und miteinander vermischt werden, wobei das kautschukelastische Polymerisat A nach der Polymerisation in einer wässrigen Phase dispergiert vorliegt und zu dem man nach Abschluß der Polymerisation mindestens ein pH-Puffersystem zufügt.

2. Verfahren nach Anspruch 1, **dadurch gekennzeichnet, daß** das kautschukeiastische Polymerisat A ausgewählt ist aus Dienkautschuken, Acrylatkautschuken, Kautschuken auf Basis von Ethylen und Propylen, Siliconkautschuken, oder deren Mischungen.

3. Verfahren nach den Ansprüchen 1 bis 2, **dadurch** gekennzeiehnet, daß das kautschukelastische Polymerisat A ein Pfropfkautschuk ist, enthaltend mindestens eine kautschukelastische Grundstufe mit einer Glasübergangstemperatur Tg von 0°C oder darunter und mindestens eine harte Pfropfstufe mit einer Glasübergangstemperatur Tg über 25°C.

4. Verfahren nach den Ansprüchen 1 bis 3, **dadurch gekennzeichnet, daß** das thermoplastische Polymere B ausgewählt ist aus vinylaromatischen Polymeren, Polymeren auf Basis von Methylmethacrylat, Polyestern, Polymeren auf Basis von Imiden, oder deren Mischungen.

5. Verfahren nach den Ansprüchen 1 bis 4, **dadurch gekennzeichnet, daß** die kautschukhaltige thermoplastische Formmasse ein Acrylnitril-Butadien-Styrol-Polymer (ABS), ein Acrylnitril-Styrol-Acrylester-Polymer (ASA), ein Methylmethacrylat-Acrylnitril-Butadien-Styrol-Polymer (MABS), oder ein Acrylnitril-(Ethylen-Propylen)-Styrol-polymer (AES), ist.

6. Verfahren nach den Ansprüchen 1 bis 5, **dadurch gekennzeichnet, daß** das pH-Puffersystem ausgewählt ist aus den Puffern Hydrogencarbonat/Carbonat, Citronensäure/Citrat, Essigsäure/Acetat, Hydrogenphosphat/Phosphat, Dihydrogenphosphat/Hydrogenphosphat, Borsäure/Borat, Ammonium/Ammoniak, Citrat/Borax, Phthalat/Alkalimetallhydroxid, Phthalat/Salzsäure, Citrat/Alkalimetallhydroxid, Citronensäure/Hydrogenphosphat, oder deren Mischungen.

7. Verfahren nach den Ansprüchen 1 bis 6. **dadurch gekennzeichnet, daß** das pH-Puffersystem Natriumhydrogencarbonat/Natriumcarbonat ist.

8. Verfahren nach den Ansprüchen 1 bis 7, **dadurch gekennzeichnet; daß** man das pH-Puffersystem vor der Koagulation des kautschukelastischen Polymerisats A zufügt.

## Revendications

1. Procédé pour diminuer le dépôt de moule au cours de la fabrication de pièces moulées par injection à partir de masses de moulage thermoplastiques contenant du caoutchouc, **caractérisé en ce que**, pour le moulage par injection, on utilise des masses de moulage thermoplastiques contenant du caoutchouc qui comportent au moins un polymère A élastique comme du caoutchouc et au moins un polymère thermoplastique B qui sont préparés par polymérisation et mutuellement mélangés, le polymère A élastique comme du caoutchouc se présentant, après la polymérisation, sous une forme dispersée dans une phase aqueuse, au moins un système tampon pour pH lui étant ajouté après la fin de la polymérisation.

2. Procédé suivant la revendication 1, **caractérisé en ce que** le polymère A élastique comme du caoutchouc est choisi parmi des caoutchoucs diéniques, des caoutchoucs acryliques, des caoutchoucs à base d'éthylène et de propylène, des caoutchoucs de silicone ou leurs mélanges.

3. Procédé suivant les revendications 1 et 2, **caractérisé en ce que** le polymère A élastique comme du caoutchouc est un caoutchouc de greffage contenant au moins une' phase de base élastique comme du caoutchouc présentant une température de transition vitreuse Tg de 0°C ou moins et au moins une phase de greffage dure présentant une température de transition vitreuse Tg supérieure à 25°C.

4. Procédé suivant les revendications 1 à 3, **caractérisé en ce que** le polymère thermoplastique B est choisi parmi des polymères vinylaromatiques, des polymères à base de méthacrylate de méthyle, des polyesters, des polymères à base d'imides, ou leurs mélanges.

5. Procédé suivant les revendications 1 à 4,
**caractérisé en ce que** la masse de moulage thermoplastique contenant du caoutchouc est un polymère d'acrylonitrile-butadiène-styrène (ABS), un polymère d'acrylonitrile-styrène-ester acrylique (ASA), un polymère de méthacrylate de méthyle-acrylonitrile-butadiène-styrène (MABS) ou un polymère d'acrylonitrile-(éthylène-propylène)-styrène (AES).

6. Procédé suivant les revendications 1 à 5, **caractérisé en ce que** le système tampon pour pH est choisi parmi les tampons bicarbonate/carbonate, acide citrique/citrate, acide acétique/acétate, hydrogénophosphate/phosphate, dihydrogénophosphate/hydrogénophosphate, acide borique/borate, ammonium/ammoniac, citrate/borax, phtalate/hydroxyde de métal alcalin, phtalate/acide chlorhydrique, citrate/hydroxyde de métal alcalin, acide citrique/hydrogénophosphate ou leurs mélanges.

7. Procédé suivant les revendications 1 à 6, **caractérisé en ce que** le système tampon pour pH est du bicarbonate de sodium/carbonate de sodium.

8. Procédé suivant les revendications 1 à 7, **caractérisé en ce qu'**on ajoute le système tampon pour pH avant la coagulation du polymère A élastique comme du caoutchouc.

## Claims

1. A process for reducing mold deposit during the production of injection moldings from rubber-containing thermoplastic molding compositions, which comprises using, for injection molding, rubber-containing thermoplastic molding compositions which comprise at least one elastomeric polymer A and encompass at least one thermoplastic polymer B, these being prepared by polymerization and mixed with one another, where the elastomeric polymer A is in dispersion in an aqueous phase after the polymerization, at least one pH buffer system being added after conclusion of the polymerization.

2. The process according to claim 1, wherein the elastomeric polymer A has been selected from diene rubbers, acrylate rubbers, rubbers based on ethylene and propylene, and silicone rubbers, and mixtures of these.

3. The process according to claim 1 or 2, wherein the elastomeric polymer A is a graft rubber comprising at least one elastomeric graft base with a glass transition temperature Tg of 0°C or below and at least one hard graft with a glass transition temperature Tg above 25°C.

4. The process according to any of claims 1 to 3, wherein the thermoplastic polymer B has been selected from vinylaromatic polymers, polymers based on methyl methacrylate, polyesters, polymers based on imides, and mixtures of these.

5. The process according to any of claims 1 to 4, wherein the rubber-containing thermoplastic molding composition is an acrylonitrile-butadiene-styrene polymer (ABS), an acrylonitrile-styrene-acrylate polymer (ASA), a methyl methacrylate-acrylonitrile-butadiene-styrene polymer (MABS), or an acrylonitrile-(ethylene-propylene)-styrene polymer (AES).

6. The process according to any of claims 1 to 5, wherein the pH-buffer system has been selected from the following buffers: hydrogencarbonate/carbonate, citric acid/citrate, acetic acid/acetate, hydrogenphosphate/phosphate, dihydrogenphosphate/hydrogenphosphate, boric acid/borate, ammonium/ammonia, citrate/borax, phthalate/alkali metal hydroxide, phthalate/hydrochloric acid, citrate/alkali metal hydroxide, citric acid/hydrogenphosphate, and mixtures of these.

7. The process according to any of claims 1 to 6, wherein the pH buffer system is sodium hydrogencarbonate/sodium carbonate.

8. The process according to any of claims 1 to 7, wherein the pH buffer system is added prior to coagulation of the elastomeric polymer A.
